# EUROPÄISCHE PATENTSCHRIFT

(11) **EP 0 498 159 B1**
(45) Veröffentlichungstag und Bekanntmachung des Hinweises auf die Patenterteilung: **27.03.1996**
(21) Anmeldenummer: 92100322.4
(22) Anmeldetag: 10.01.1992
(51) Int. Cl.: G05D 16/06, F16K 31/365

(54) **Temperaturkompensierter Druckregler**
Temperature compensated pressure controller
Régulateur de pression compensé en température

(30) Priorität: 08.02.1991 DE 4103769
(43) Veröffentlichungstag der Anmeldung: 12.08.1992
(73) Patentinhaber: Drägerwerk Aktiengesellschaft, D-23542 Lübeck (DE)
(72) Erfinder: Steinert, Günter, W-2060 Bad Oldesloe (DE); Stegmann, Holger, W-2400 Lübeck 1 (DE)

(56) Entgegenhaltungen:
- EP-A- 0 042 432
- EP-A- 0 077 543
- DE-A- 2 360 256
- FR-A- 2 573 410
- GB-A- 2 105 007

## Beschreibung

Die Erfindung betrifft eine Regelvorrichtung mit einer durch eine Membran von einem Druckraum abgetrennte, mit einem Gas gefüllte Referenzdruckkammer, mit einem federelastischen Element, welches sich auf der Fläche der Membran einerseits und auf einer der Membran zugewandten Seite der Referenzdruckkammer andererseits abstützt.

Aus der EP 42 432 A1 ist ein Druckregler mit einem Ventil bekannt, dessen Ventilverschlußkörper zwischen einem ersten Druckraum des Druckreglers und einer dem ersten Druckraum nachgeschalteten Leitung liegt. Von dem ersten Druckraum ist ein weiterer Druckraum über eine Membran gasdicht abgetrennt, welche sich unter Druckbelastung eines in dem weiteren Druckraum aufgenommenen federelastischen Elementes und eines mit einem Gas gefüllten Balges befindet. Die Membran steht in Wirkverbindung mit dem Verschlußkörper des Ventils. Die von dem Balg auf die Membran ausgeübte Druckkraft verändert sich in Abhängigkeit vom Umgebungsdruck und der Umgebungstemperatur, wobei der Gasdruck innerhalb des Balges derart eingestellt ist, daß in einer dem Druckregler nachgeschalteten Komponente eine vorbestimmte Kompensationswirkung erreicht wird.

Bei dem aus der DE-PS 932 764 bekannten Druckregler befindet sich über dem Ventilverschlußkörper ein balgenförmiger Referenzdruckraum, der mit einem bestimmten Druck gefüllt ist, der sich zusammen mit einer Druckfeder zu einem Gesamtöffnungsdruck für das Verschlußelement addiert. Der Referenzdruckraum ist mit der Umgebungsatmosphäre verbunden, so daß sich Druckschwankungen in der Umgebungsatmosphäre derart auswirken, daß bei sich erhöhendem Atmosphärendruck auch die Druckwirkung auf das Verschlußelement erhöht bzw. bei sich verringerndem Atmosphärendruck erniedrigt wird. Somit arbeitet das Ventil unter Berücksichtigung des Umgebungsdruckes. Bei verschiedenen Einsatzmöglichkeiten, insbesondere für die Luft- und Raumfahrt, sind die gasführenden Leitungen und vor allem auch die Druckregel- und Steuereinrichtungen hohen Temperaturschwankungen ausgesetzt. Da sich mit sich verändernder Umgebungstemperatur auch der Elastizitätsmodul des federelastischen Elementes ändert, ist eine genaue, auf die Konstanz der Federkraft angewiesene Druckregelung nur mit erhöhtem Aufwand möglich. Nimmt man z.B. als ein federelastisches Element eine Druckfeder aus Federstahl (X12 Chromnickel 177), dann ist bekannt, daß sich der Elastizitätsmodul um etwa 0,0489 %. pro °C ändert. Das bedeutet bei einer typischen Temperaturänderung von 70 °C, daß mit einer Regelabweichung von etwa 3,4 % zu rechnen ist. Will man diese Abweichung vermeiden, wäre der Einsatz speziellen Federstahls mit in weiten Temperaturbereichen konstant bleibendem Elastizitätsmodul denkbar, was jedoch zu einer teuren Ausführungsform führt. Daneben ist auch vorgeschlagen worden, zum Zwecke der Temperaturkompensation der Federkraft eines Druckreglers auf die Feder einen Kolben einwirken zu lassen, der mit einem Reservoir für eine Flüssigkeit, z.B. Silikon, verbunden ist. Bei Nachlassen der Federkraft infolge erhöhter Temperatur dehnt sich die Flüssigkeit aus und verschiebt den Kolben und damit die Feder in eine solche Richtung, daß sich die Stellkraft der Feder entsprechend erhöht. Wenn sich die Umgebungstemperatur wieder verringert, zieht sich das Flüssigkeitsreservoir zusammen, und die sich erhöhende Federkraft sorgt für eine gleichbleibende Druckwirkung (EP-A-113 470). Diese bekannte Anordnung hat den Nachteil, daß eine aufwendige Konstruktion nötig ist, um einerseits eine Kolben-Zylinderanordnung alleine nur auf die Feder wirken lassen zu können; außerdem sind aufwendige Dichtmaßnahmen erforderlich, um den Gasraum von dem Flüssigkeitsreservoir zu trennen. Das ständige Bereitstellen einer nicht unerheblichen Menge an Flüssigkeit macht die Anwendung des bekannten Druckreglers auf dem Gebiet der Luft- und Raumfahrt wegen des hohen Gewichtes ungeeignet. Darüberhinaus dürften nur solche Flüssigkeiten ausgewählt werden, die in dem zu betrachtenden Temperaturbereich nicht gefrieren.

Der vorliegenden Erfindung liegt somit die Aufgabe zugrunde, eine Regelvorrichtung der genannten Art so zu verbessern, daß die Kompensation der sich mit der Temperatur ändernden Druckbelastung des federelastischen Elementes durch einfache Mittel verwirklicht ist.

Die Lösung der Aufgabe erfolgt dadurch, daß der Gasdruck des Gases in der Referenzdruckkammer derart bemessen ist, daß durch die temperaturabhängige Ausdehnung des Gases in der Referenzdruckkammer eine derartige, der Druckbelastung des federelastischen Elementes entgegen wirkende Kompensationskraft auf die Membran ausgeübt wird, daß zumindestens die mit der Temperaturänderung einhergehende Elastizitätsmoduländerung des federelastischen Elementes ausgeglichen ist.

Mit der Erfindung wird der Vorteil erzielt, daß der Gasdruck in der Referenzdruckkammer nur soweit eingestellt zu werden braucht, daß dessen temperaturabhängige Ausdehnungskennlinie, die im betrachteten Fall dem linearen Verlauf eines idealen Gases entspricht (Gesetz von Gay-Lussac), der linearen Kennlinie des federelastischen Elementes angepaßt ist. Der Kennlinienverlauf ist gegenläufig, so daß auf diese Weise eine einfache Kompensation der Druckbelastung durch das federelastische Element mit sich verändernder Temperatur verwirklichbar ist, ohne daß an den gegenständlichen Ausführungsformen des Druckreglers umfangreiche Änderungen durchgeführt werden müssen. Mit dem erfindungsgemäßen Druckregler werden temperaturbedingte Regelabweichungen soweit vermindert, daß sie für die Regelgenauigkeit ohne bedeutenden Einfluß sind. Die kompensierte Regelabweichung wird auf etwa 1/4 der unkompensierten Regelabweichung reduziert.

Mit der Erfindung läß sich nicht nur die Temperaturabhängigkeit der Federkennlinie des federelastischen Elements kompensieren, sondern auch andere temperaturabhängige Veränderungen wie z.B. Längenausdehnung des Gehäuses in Richtung der federelastischen Kraft werden mit abgefangen.

Es ist zweckmäßig, die Referenzdruckkammer zur Umgebung hin abzuschließen, so daß sie selbst mit dem in Betracht zu ziehenden Gas unter einen solchen Druck gesetzt werden kann, daß die Temperaturabhängigkeit der federelastischen Kraft kompensiert wird.

Um einen von dem Umgebungsdruck abhängigen Druckregler zu erhalten, ist die Referenzdruckkammer zur Umgebung hin geöffnet, und es ist in ihr ein Hilfsraum vorgesehen, dessen Gasfüllung unter den die Kompensationskraft ausübenden Druck gesetzt ist. Der Hilfsraum arbeitet zum einen wie eine Druckdose, die sich unter veränderndem Umgebungsdruck mehr oder weniger ausdehnt bzw. zusammenzieht, und das in ihr enthaltene Gas kompensiert durch seine Ausdehnungseigenschaft die mit der Temperatur sich verändernde Federkraft. Der Hilfsraum ist dabei einerseits auf der der Referenzdruckkammer zugewandten Oberfläche der Membran gasdicht befestigt, andererseits ist er mit der Gehäuseinnenwand der Referenzdruckkammer verbunden.

Die Füllung entweder der Referenzdruckkammer oder des Hilfsraumes geschieht zweckmäßigerweise dadurch, daß eine Füllöffnung vorgesehen ist, durch welche hindurch das Gas mit einem vorbestimmten Druck eingefüllt wird, wonach dieser Füllanschluß mit herkömmlichen Mitteln gasdicht und druckfest verschlossen wird.

Die Gasfüllung und ihr Druck in der Referenzdruckkammer bzw. in dem Hilfsraum sind unter Berücksichtigung der geometrischen Verhältnisse wie: Membranfläche, Federkonstante, Druckfläche des federelastischen Elements, zu regelnder Hinterdruck, auf das Material und die Federkennlinie abzustimmen.

Die gleiche temperaturabhängige Druckkompensation läßt sich auch bei einem barometrische gesteuerten Höhendruckschalter verwirklichen. In diesem Falle wird nicht der Druck eines strömenden Mediums geregelt, sondern die Betätigung eines Schaltfühlers wird mit Hilfe einer barometrischen Druckdose (Faltenbalg) über eine Schaltmembran ausgelöst. Der Fülldruck der als Hilfsmembran in dem Gehäuse des Druckschalters dienenden Druckdose ist derart bemessen, daß die temperaturabhängige Veränderung (Verringerung) der Federkraft durch die sich entgegenwirkende Ausdehnung des Gases kompensiert wird. Somit erhält man einen Höhendruckschalter, dessen Betätigen seines Schaltfühlers nur noch von dem Umgebungsdruck und nur noch unmaßgeblich von der Umgebungstemperatur abhängig ist.

Dadurch wird ein Schaltpunkt wesentlich reproduzierbarer und in engeren Toleranzgrenzen einstellbar.

Ein Ausführungsbeispiel der Erfindung wird anhand der Zeichnung dargestellt und im folgenden näher erläutert.

Es zeigen
- Fig. 1: den Schnitt durch einen Druckregler mit geschlossener Referenzdruckkammer
- Fig. 2: den Schnitt durch einen Druckregler mit offener Referenzdruckkammer und Hilfsraum.
- Fig. 3: den Schnitt durch einen Druckschalter mit offenem Gehäuse und Hilfsraum

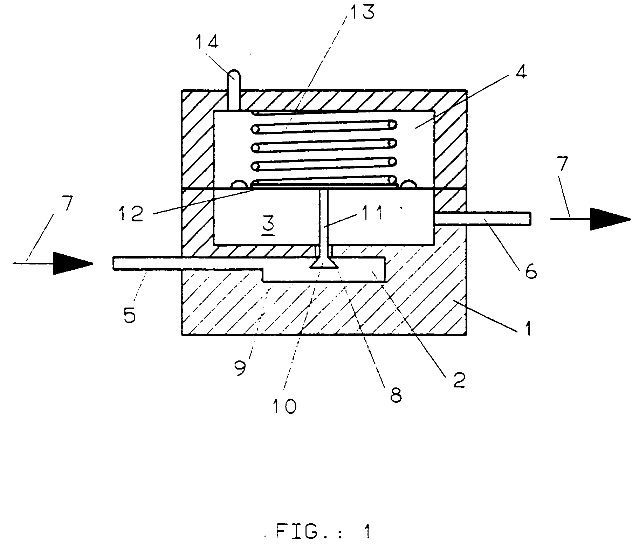

In Fig. 1 ist das Gehäuse (1) eines Druckreglers dargestellt, welches einen Vordruckraum (2), einen Hinterdruckraum (3) sowie eine Referenzdruckkammer (4) enthält. In den Vordruckraum (2) mündet ein Einlaß (5), und von dem Hinterdruckraum (3) geht ein Auslaß (6) zu einem nicht dargestellten Verbraucher. Der Einlaß (5) wird von einer nicht dargestellten Druckgasquelle gespeist. Die Strömungsrichtung des Fluids, z.B. Wasserstoff oder mit Sauerstoff angereichertes Atemgas, wird durch die Richtungspfeile (7) angedeutet. Der Vordruckraum (2) und der Hinterdruckraum (3) befinden sich über einen Durchbruch (8) in einer Gehäusewand (9) in Strömungsverbindung miteinander, wobei der Durchbruch als Ventilsitz (8) für einen Ventilverschlußkörper (10) dient, welcher über einen Stift (11) mit der dem Hinterdruckraum (3) zugewandten Fläche einer Membran (12) verbunden ist. Die Membran (12) ist in dem Gehäuse (1) gasdicht eingespannt und dient als Trennwand für die dahinterliegende Referenzdruckkammer (4). In der Referenzdruckkammer (4) ist eine Druckfeder (13) aufgenommen, die sich einerseits auf der Fläche der Membran (12) und andererseits auf der der Membran (12) zugewandten Innenseite der Referenzkammer (4) abstützt. Die Druckkraft der Druckfeder (13) hält den Ventilverschlußkörper (10) entgegen dem in dem Hinterdruckraum (3) vorherrschenden Hinterdruck in Offenstellung, so daß die Strömungsverbindung zwischen dem Einlaß (5) und dem Auslaß (6) aufrechterhalten ist. Die Referenzdruckkammer (4) ist über einen Füllstützen (14) mit Gas (z.B. Stickstoff) definierten Druckes gefüllt, welcher im dargestellten Zustand nach erfolgter Füllung zur Umgebung hin gas- und druckdicht verschlossen ist.

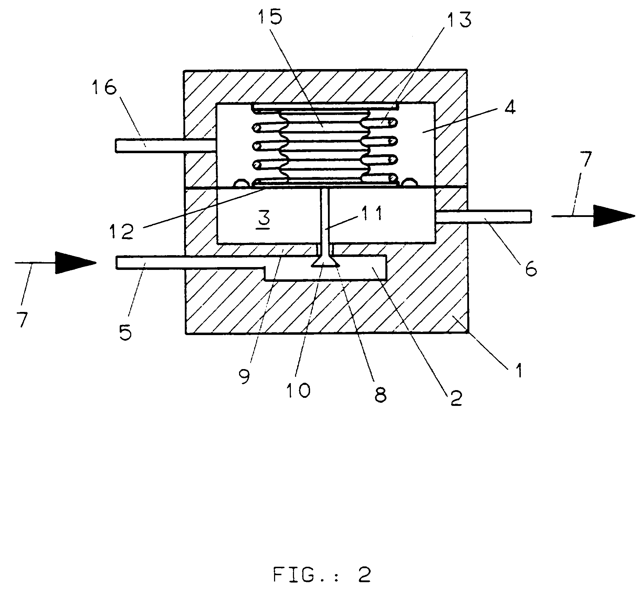

Der in Fig. 2 dargestellte Druckregler ist in wesentlichen Teilen gleich wie in Fig. 1 aufgebaut, so daß gleiche Bauteile auch gleiche Bezugsziffern aufweisen. Die Referenzdruckkammer (4) enthält neben der Druckfeder (13) einen balgförmigen Hilfsraum (15), welcher, von der Druckfeder (13) umhüllt, ebenfalls zwischen der der Referenzdruckkammer (4) zugewandten Oberfläche der Membran (12) und der der Membram zugewandten Seite der Referenzdruckkammer (4) gasdicht befestigt ist. Der Hilfsraum (15) ist so ausgestattet, daß er einmal dem Umgebungsdruck ausgesetzt ist, zum anderen in seinem Innenraum die unter vorgegebenem Gasdruck befindliche Gasfüllung gasdicht umschließt und zusätzlich noch den Hubbewegungen der Membran (12) folgen kann. Die Referenzdruckkammer (4) ist über eine Entlüftungsleitung (16) mit der Umgebung verbunden. Die Füllung des Hilfsraums (15) kann auf ähnliche Weise mit Hilfe eines Füllstutzens bewerkstelligt werden, wie es anhand der Figur 1 erläutert wurde, es ist jedoch auch möglich, die Montage des Hilfsraums (15) unter einer Gasatmosphäre definierten Drucks durchzuführen, so daß das dabei einmal eingefangene Gasvolumen im Hilfsraum (15) auch während des Betriebs des Druckreglers unter dem notwendigen Gasdruck zur Verfügung steht.

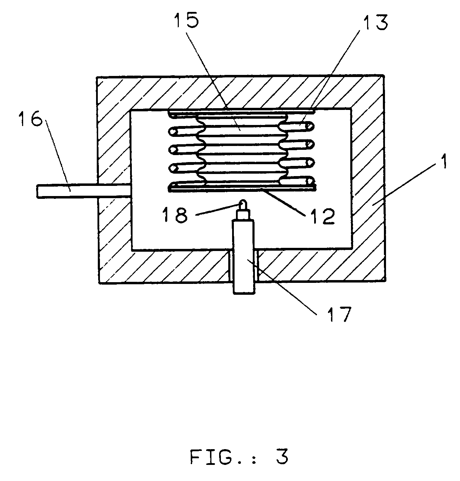

In Fig. 3 ist ein Druckschalter dargestellt, dessen Gehäuse (1) zur Umgebung hin über die Entlüftungsleitung (16) offen ist. Eine zylindrische Druckfeder (13) stützt sich zwischen einer Membran (12) und einer Innenwand des Gehäuses (1) ab. Die Schaltfläche der Membran (12) ist in Abstand zu einem Schaltstift (18) eines Schaltfühlers (17) gehalten. Zwischen Membran (12) und Innenwand des Gehäuses (1), von der Zylinderfeder (13) umgeben, befindet sich ein Hilfsraum (15) in Form eines elastischen Faltenbalges, der mit einem Gas vorgegebenen Druckes gefüllt ist. Von dem Schaltfühler (17) führt eine nicht dargestellte Schaltleitung zu einem ebenfalls nicht dargestellten, zu beschaltenden Bauteil weiter. Der dargestellte Schalter ist als barometrisch gesteuerter Höhendruckschalter anzusehen, wobei die von der Umgebungstemperatur abhängige Veränderung der Federkennlinie durch die Ausdehnungsfähigkeit des im Faltenbalg druck- und gasdicht eingeschlossenen Gasvolumens kompensiert wird.

## Patentansprüche

1. Regelvorrichtung mit einer durch eine Membran (12) von einem Druckraum (3) abgetrennte, mit einem Gas gefüllte Referenzdruckkammer (4), mit einem federelastischen Element (13), welches sich auf der Fläche der Membran (12) einerseits und auf einer der Membran (12) zugewandten Seite der Referenzdruckkammer (4) andererseits abstützt, dadurch gekennzeichnet, daß der Gasdruck des Gases in der Referenzdruckkammer derart bemessen ist, daß durch die temperaturabhängige Ausdehnung des Gases in der Referenzdruckkammer eine derartige, der Druckbelastung des federelastischen Elementes (13) entgegen wirkende Kompensationskraft auf die Membran (12) ausgeübt wird, daß zumindestens die mit der Temperaturänderung einhergehende Elastizitätsmoduländerung des federelastischen Elementes (13) ausgeglichen ist.

2. Regelvorrichtung nach Anspruch 1, dadurch gekennzeichnet, daß die Referenzdruckkammer (4) zur Umgebung hin abgeschlossen ist.

3. Regelvorrichtung nach Anspruch 1, dadurch gekennzeichnet, daß die Referenzdruckkammer (4) zur Umgebung hin offen ist, und daß in ihr ein Hilfsraum (15) vorgesehen ist, dessen Gasfüllung unter den die Kompensationskraft ausübenden Druck gesetzt ist.

4. Regelvorrichtung nach Anspruch 3, dadurch gekennzeichnet, daß das Federelement eine zylinderförmige Druckfeder (13) aus Federstahl ist, und daß der Hilfsraum durch einen von der Feder (13) umgebenen, deren Hubbewegungen nachfolgenden Faltenbalg (15) gebildet ist.

5. Regelvorrichtung nach einem der Ansprüche 1 bis 4, dadurch gekennzeichnet, daß ein Druckschalter mit einem Schaltstift (8) vorgesehen ist, welcher durch die Hubbewegung der Membran (12) betätigt ist.

## Claims

1. Control device having a reference pressure chamber (4) separated from a pressure area (3) by a diaphragm (12) and filled with a gas, having an elastic spring element (13) which is supported on the surface of the diaphragm (12) on one side and on a side of the reference pressure chamber (4) facing the diaphragm (12) on the other side, characterized in that the gas pressure of the gas in the reference pressure chamber is measured such that by way of the temperature-dependent expansion of the gas in the reference pressure chamber such a compensation force counteracting the pressure load of the elastic spring element (13) is exerted on to the diaphragm (12) that at least the elasticity module change of the elastic spring element (13) accompanying with the temperature change is compensated.

2. Control device according to claim 1, characterized in that the reference pressure chamber (4) is sealed with respect to the environment.

3. Control device according to claim 1, characterized in that the reference pressure chamber (4) is open to the environment and that in it there is provided an auxiliary area (15), the gas which fills it being put under the pressure which exerts the compensation force.

4. Control device according to claim 3, characterized in that the spring element is a cylindrical pressure spring (13) of spring steel, and in that the auxiliary area is formed by bellows (15) surrounded by the spring (13) and following its lifting movements.

5. Control device according to one of claims 1 to 4, characterized in that a push switch with an operating pin (8) is provided, which is operated by the lifting movement of the diaphragm (12).

## Revendications

1. Dispositif de régulation avec une chambre de pression de référence (4) remplie d'un gaz, séparée d'une chambre de pression (3), par une membrane (12), avec un élément (13) élastique à la manière d'un ressort, qui prend appui d'une part sur la surface de la membrane (12) et d'autre part sur un côté tourné vers la membrane (12) de la chambre de pression de référence (4), caractérisé en ce que la pression du gaz dans la chambre de pression de référence est telle que, du fait de la dilatation du gaz, dépendant de la température, dans la chambre de pression de référence, il est exercé sur la membrane (12) une force de compensation, agissant à l'encontre de la charge de pression de l'élément (13) élastique à la manière d'un ressort, telle qu'au moins la variation du module d'élasticité de l'élément (13) élastique à la manière d'un ressort, accompagnant la variation de température, est compensée.

2. Dispositif de régulation selon la revendication 1, caractérisé en ce que la chambre de pression de référence (4) est fermée par rapport à l'environnement.

3. Dispositif de régulation selon la revendication 1, caractérisé en ce que la chambre de pression de référence (4) est ouverte vers l'environnement, et en ce que dans celle-ci est prévue une chambre auxiliaire (15), dont le remplissage de gaz est placé sous la pression exerçant la force de compensation.

4. Dispositif de régulation selon la revendication 3, caractérisé en ce que l'élément de ressort est un ressort de pression (13) cylindrique en acier à ressort, et en ce que la chambre auxiliaire est formée par un soufflet (15) entouré par le ressort (13), suivant ses déplacements.

5. Dispositif de régulation selon l'une des revendications 1 à 4, caractérisé en ce qu'est prévu un interrupteur manométrique avec une tige de commutation (8), qui est actionné par le déplacement de la membrane (12).
